# EUROPEAN PATENT APPLICATION

(11) **EP 4 517 537 A1**
(43) Date of publication of application: **05.03.2025**
(21) Application number: 23194296.2
(22) Date of filing: 30.08.2023
(51) Int. Cl.: G06F 11/36

(54) **METHOD FOR IDENTIFYING TEST SCENARIOS FOR TESTING BEHAVIOUR COMPETENCIES OF AUTONOMOUS VEHICLES**

(71) Applicant: Siemens Industry Software NV, 3001 Leuven (BE)
(72) Inventor: B Venkataraman, Saadhana, 600099 Chennai, Tamil Nadu (IN); Indla, Vijaya Sarathi, 560032 Bangalore, Karnataka (IN); Kanade, Deepika Kiran, 411038 Pune, Maharastra (IN); Mathew, Bony, 683542 Perumbavoor, Kerala (IN); Mukherjee, Saikat, 560102 Bangalore, Karnataka (IN); Pathrudkar, Sagar, 411041 Pune, Maharashtra (IN)
(74) Representative: Isarpatent

(57) **Abstract**

Disclosed is a method (100) and a system (200) for generating test scenarios to validate the behaviour competencies of autonomous vehicles. The method involves receiving a behavioural competency defined in natural language pertaining to a given operation of the autonomous vehicles. This competency is parsed into objects, representative of the Operational Design Domain (ODD), and events, representative of the Object and Event Detection and Response (OEDR). These objects and events are then transformed into a data structure (300). Subsequently, this data structure is mapped to a hierarchy of search queries representing relationships and interactions among the objects and events. The hierarchy of search queries is provided to a scenario extraction tool (10), which leverages the hierarchical queries, extracts relevant scenarios from real-world data, to validate behaviour of the autonomous vehicles for the given operation thereof.

## Description

The present invention relates generally to testing and validation of autonomous vehicles. More specifically, the present invention pertains to a computer-implemented method for identifying test scenarios for testing behavioural competencies of autonomous vehicles based on parsing and transforming behavioural competencies into structured search queries for scenario extraction.

Autonomous vehicles, or self-driving cars as they are commonly known, represent the next evolution in transportation. These vehicles, with their combination of advanced sensors, sophisticated algorithms, and powerful computing, can navigate and drive with limited to no human intervention. The primary challenge in realizing this technology is ensuring their behavioural competency. In other words, it is important to validate that these vehicles would behave correctly and safely in a wide variety of driving scenarios. These driving scenarios can be unpredictable and varied. An autonomous vehicle may need to navigate through city intersections, adjust to sudden shifts in weather conditions, or even react to unexpected behaviours from pedestrians or other drivers. Therefore, ensuring the behavioural competency of the autonomous vehicle across these situations is important.

Traditionally, the industry has utilized two main approaches to test these vehicles: simulation-based testing and real-world trials. In simulation-based testing, the vehicles are subjected to different driving scenarios within controlled environments. This method ensures safety as any errors or malfunctions wouldn't result in real-world consequences. However, the limitation is that a simulation might not be able to perfectly replicate the intricate nuances of real-world driving. On the other hand, real-world trials involve testing the vehicles directly on roads, usually, with actual traffic. While this offers a true test environment, there are also risks involved, such as any malfunction or incorrect response can lead to actual accidents.

Another approach to scenario-based testing has been to use behavioural competencies defined in natural language. These competencies detail in a human-readable format how a vehicle should behave in a specific situation. For instance, a behavioural competency may state that on determining a pedestrian crossing the road, the vehicle should reduce speed, but translating these competencies into test scenarios is a challenge. Manual translation is not only labour-intensive but also prone to errors and lacks scalability.

The present invention seeks to overcome these challenges by providing a computer-implemented method for identifying test scenarios for testing behaviour competencies of autonomous vehicles that addresses these limitations. A closer analysis of these competencies reveals two integral components: Operational Design Domain (ODD) and Object and Event Detection and Response (OEDR). ODD refers to the environment in which the vehicle operates, such as highways or specific weather conditions. OEDR, on the other hand, pertains to how the vehicle responds to certain objects and events. Traditionally, these two aspects have been considered separately, but in practical driving conditions, they are closely interlinked. The present invention provides an efficient, comprehensive method that can parse behavioural competencies, derive the underlying ODD and OEDR contexts, and then produce relevant test scenarios.

The object of the present invention is achieved by a computer-implemented method for identifying test scenarios for testing behaviour competencies of autonomous vehicles. The method comprises receiving a behavioural competency defined in a natural language and related to a given operation of the autonomous vehicles. The method further comprises parsing the received behavioural competency into a set of objects, representative of Operational Design Domain (ODD) for the autonomous vehicles, and events, representative of Object and Event Detection and Response (OEDR) for the autonomous vehicles. The method further comprises transforming the set of objects and events into a data structure. The method further comprises mapping the data structure to a hierarchy of search queries, the hierarchy of search queries representing relationships and interactions between the objects and the events. The method further comprises providing the hierarchy of search queries to a scenario extraction tool, the scenario extraction tool configured to extract scenarios from real-world data based on the provided hierarchy of search queries. Herein, the extracted scenarios are utilized by the scenario extraction tool for validating behaviour of the autonomous vehicles for the given operation thereof.

In one or more embodiments, parsing the received behavioural competency into the set of objects and events comprises extracting a list of nouns and performing a keyword-based search to extract the set of objects and events from the extracted list of nouns.

In one or more embodiments, parsing the received behavioural competency into the set of objects and events comprises converting the behavioural competency defined in the natural language into a semantic query, and wherein the semantic query is matched with a semantic data model used to index data related to the autonomous vehicles.

In one or more embodiments, the data structure is a graph data structure.

In one or more embodiments, transforming the set of objects and events into the graph data structure comprises: creating nodes in a graph to represent the objects and using edges in the graph to represent events; and assigning properties to the nodes and the edges based on attributes of the objects and the events, respectively.

In one or more embodiments, mapping the graph data structure to the hierarchy of search queries comprises structuring the search queries in the hierarchy based on the relationships and interactions between the nodes and the edges of the graph data structure.

In one or more embodiments, the method further comprises indexing the hierarchy of search queries in a database.

In one or more embodiments, the hierarchy of search queries comprises weightings for each search query, and the scenario extraction tool is configured to use the weightings to prioritize scenario extraction.

The object of the present invention is also achieved by a system comprising one or more processing units and a memory unit configured to execute the steps of the computer-implemented method according to any one of the preceding method steps.

The object of the present invention is further achieved by a computer program product, having machine-readable instructions stored therein, that when executed by the one or more processing units, cause the processing unit to perform aforementioned method steps.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
- FIG 1: is a flowchart representation of a computer-implemented method for identifying test scenarios for testing behaviour competencies of autonomous vehicles, in accordance with one or more embodiments of the present invention;
- FIG 2: is a block diagram representation of a system for identifying test scenarios for testing behaviour competencies of autonomous vehicles, in accordance with one or more embodiments of the present invention; and
- FIG 3: is an exemplary depiction of a data structure representing a hierarchy of search query, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for identifying test scenarios for testing behaviour competencies of autonomous vehicles are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

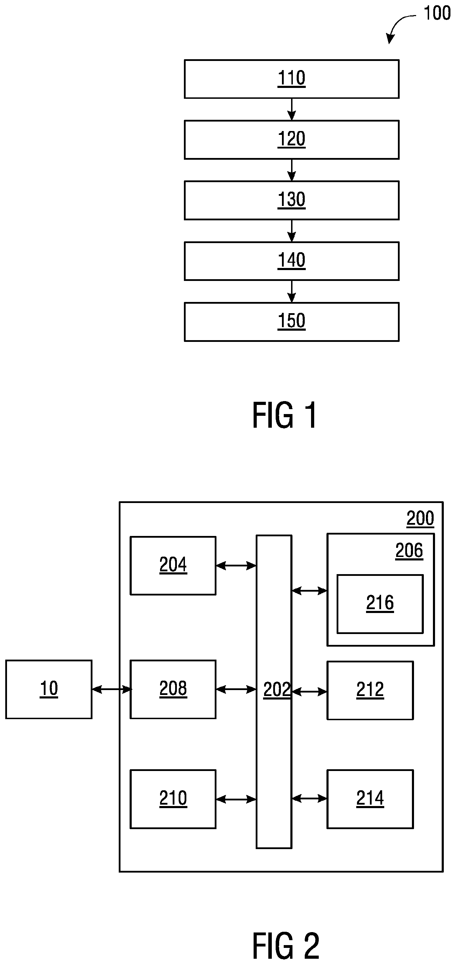

Referring now to FIG 1, illustrated is a flowchart of a method (as represented by reference numeral 100) for identifying test scenarios for testing behaviour competencies of autonomous vehicles, in accordance with an embodiment of the present invention. As used herein, "test scenarios" refer to predefined conditions or sequences of events designed to evaluate the performance, safety, and responsiveness of an autonomous vehicle. These test scenarios are structured representations that simulate specific situations or challenges that an autonomous vehicle might encounter in real-world driving conditions. A test scenario might encompass elements such as road type, traffic conditions, weather situations, pedestrian actions, and other dynamic elements. The aim of these test scenarios is to provide a consistent framework to measure how well systems of the autonomous vehicle can detect, interpret, and respond to these conditions, ensuring safe and efficient operation of the vehicle. Further, as used herein, "behaviour competencies" denote the expected, standardized responses or actions that an autonomous vehicle should exhibit in specific situations. These behaviour competencies outline the ideal or correct behaviour of the autonomous vehicle in response to a particular stimulus or set of conditions. For instance, a behavioural competency may provide how an autonomous vehicle should react to a pedestrian suddenly stepping onto the road, or adjust its speed in response to changing weather conditions.

Behavioural competencies serve as benchmarks against which the actual responses of autonomous vehicles are evaluated, ensuring that these vehicles act in ways that prioritize safety, efficiency, and compliance with road rules.

Referring to FIG 2, illustrated is a block diagram of a system 200 for identifying the test scenarios for testing the behaviour competencies of the autonomous vehicles, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for identifying the test scenarios for testing the behaviour competencies of the autonomous vehicles. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for identifying the test scenarios for testing the behaviour competencies of the autonomous vehicles. In particular, the memory unit 206 includes a test scenarios identification module 216 to perform steps for the said purpose. Also, in the system 200, the memory unit 206 may be configured to store the data associated with or generated by the execution of the inventive steps.

Herein, the system 200 may provide a generated output (which is in form of hierarchy of search queries, as discussed later in detail), such as from the output device 214, via the interface 208, to a scenario extraction tool (as represented by reference numeral 10) for further processing or the like. It may be appreciated that although in the present illustrations, the scenario extraction tool 10 is shown separate from the system 200; in other examples, the scenario extraction tool 10 may be part of the system 200 itself without departing from the scope and the spirit of the present invention.

Referring to FIGS 1 and 2 in combination, the various steps of the method 100 as described hereinafter may be executed in the system 200, or specifically in the processing unit 204 of the system 200, for identifying the test scenarios for testing the behaviour competencies of the autonomous vehicles. For purposes of the present invention, the present method 100 is embodied as a behaviour competencies testing algorithm. It may be appreciated that although the method 100 is illustrated and described as a sequence of steps, it may be contemplated that various embodiments of the method 100 may be performed in any order or a combination and need not include all of the illustrated steps.

At step 110, the method 100 includes receiving a behavioural competency defined in a natural language and related to a given operation of the autonomous vehicles. Herein, the behavioural competency is received through an input source, such as the input device 212, through manual entry by a user, automated ingestion from a database, or a digital transfer from another system or tool.

It may be understood that at its core, a "behavioural competency" is a delineation of expected performance or behaviour that an autonomous vehicle should exhibit in specific situations. Expressed in natural language, these competencies cater to human understanding rather than a machine code or purely technical language. This ensures that a wide range of experts, from automotive engineers to policymakers, can contribute to, and understand, the behavioural expectations set for the autonomous vehicle. For example, a behavioural competency might be stated as: "The vehicle should safely merge onto a highway when the traffic is moving at speeds between 50 to 70 kmph." Herein, the behavioural competency is related to the given operation of the autonomous vehicles, such as a distinct driving activity or manoeuvre that the vehicle is expected to perform. By relating the behavioural competency to the given operation, the behavioural competency sets a clear benchmark for how the autonomous vehicle should perform during that specific operation.

The behavioural competency for autonomous vehicles is a set of standards or guidelines that define how these vehicles should behave or operate in various scenarios. These competencies ensure that the autonomous vehicles are not only efficient but also safe for both the vehicle's passengers and other road users. In the present examples, the behavioural competency includes one or more of: detect and respond to speed limit changes and speed advisories, perform high-speed merge, perform low-speed merge, navigate intersections and perform turns, detect and respond to encroaching oncoming vehicles, detect passing and no passing zones and perform passing manoeuvres, perform car following, detect and respond to stopped vehicles, detect roundabouts, detect and respond to static obstacles in the path of the vehicle. For instance, the behavioural competency of "detect and respond to speed limit changes and speed advisories" is important as speed limits can change due to various factors, including road type, area type (residential, commercial, school zones), and specific situations (construction zones, accident zones). An autonomous vehicle needs to be adept at recognizing these changes in real-time. Once detected, the vehicle must adjust its speed accordingly, ensuring it adheres to the stipulated limits. This not only ensures the safety of the vehicle and its passengers but also complies with traffic rules and regulations.

The behavioural competencies are generally defined in standards and frameworks set by organizations in the field of vehicle safety and automation. In the present embodiments, the behavioural competency may be received by selection from a list provided by one or more of: National Highway Traffic Safety Administration (NHTSA), ISO 26262, OpenLabel. When the behavioural competency is selected from a list provided by such organizations, it means that the competency is in line with the defined guidelines and standards, ensuring a high level of reliability and relevance to real-world scenarios. This ensures that the autonomous vehicle's testing scenarios are not just theoretical but are grounded in real-world standards, expectations, and challenges, making the testing process more thorough, accurate, and reliable.

At step 120, the method 100 includes parsing the received behavioural competency into a set of objects, representative of Operational Design Domain (ODD) for the autonomous vehicles, and events, representative of Object and Event Detection and Response (OEDR) for the autonomous vehicles. Herein, parsing the received behavioural competency aims to dissect the behavioural competency into clear, actionable elements that an autonomous vehicle system can interpret and act upon. "Objects" herein refer to definitional parameters or constraints that indicate the specific conditions and domains under which an autonomous driving system is designed to operate, whereas "events" herein denote dynamic situations or circumstances the vehicle might encounter within its operational domain, highlighting the vehicle's capability to identify and respond to both stationary and moving entities. The role of parsing the received behavioural competency into the set of objects and events is to decompose the generalized, high-level behavioural expectations of an autonomous vehicle into specific, actionable criteria.

As used herein, "Operational Design Domain (ODD)" refers to the specific conditions under which an autonomous driving system is designed to function. It sets boundaries for where, when, and how the autonomous system can operate. Objects that are representative of the ODD can be thought of as definitional parameters or constraints. For instance, if the behavioural competency mentions "urban roads during daylight," the objects derived from this might include "urban roads" as an environment and "daylight" as a lighting condition. These parsed objects are indicative of the conditions and the domain within which the autonomous vehicle is expected to operate and exhibit the behavioural competency. Parsing these objects helps in ensuring that the scenarios created for testing are both relevant and adherent to the operating boundaries the vehicle is designed for.

"Object and Event Detection and Response (OEDR)," on the other hand, refers to the dynamic elements of driving. OEDR captures the vehicle's capability to identify both stationary and moving entities in its environment and how it responds to them. Events are representative of situations or circumstances the vehicle might encounter within its ODD. Parsing the behavioural competency into events focuses on capturing these dynamic interactions. For instance, if the competency mentions "safely merge onto a highway when confronted by a fast approaching vehicle from behind," the event could be the "approaching vehicle from behind," and the associated response would be the "safe merge."

By breaking down the competency into objects (pertaining to ODD) and events (related to OEDR), the method converts naturally expressed expectation into precise, machine-understandable terms. These parsed elements ensure that the generated test scenarios cover the full spectrum of conditions (ODD) and dynamic interactions (OEDR) that the autonomous vehicle is expected to handle, ensuring a comprehensive assessment of its capabilities and behaviour, and forms the foundation for real-world testing scenarios.

In an embodiment, parsing the received behavioural competency into the set of objects and events comprises extracting a list of nouns and performing a keyword-based search to extract the set of objects and events from the extracted list of nouns. That is, this process directly extracts nouns (or potentially other keyword types) from the behavioural competency, and these extracted keywords (or nouns) are then used to perform searches to determine the set of objects and events. A Natural Language Processing (NLP) algorithm may be used for such process. The process begins by isolating nouns from the behavioural competency described in natural language. Nouns, in most linguistic structures, represent entities, things, or concepts that actions happen to or that execute actions. By extracting a list of nouns from the behavioural competency, the process determines the primary elements or 'objects' associated with that behavioural competency. Once this list is established, a keyword-based search is initiated. This search step scans the list to identify and extract specific objects and events relevant to the Operational Design Domain (ODD) and Object and Event Detection and Response (OEDR) for the autonomous vehicles. This methodology is comparatively straightforward and can be especially efficient for competencies that are clearly defined and less ambiguous.

In an alternate embodiment, parsing the received behavioural competency into the set of objects and events comprises converting the behavioural competency defined in the natural language into a semantic query, and wherein the semantic query is matched with a semantic data model used to index data related to the autonomous vehicles. This process offers a more intricate approach, using the semantics of the provided behavioural competency. Instead of merely extracting nouns and using them as keywords, the process here involves converting the entire behavioural competency, in natural language, into a semantic query. This ensures a more comprehensive and nuanced understanding of the behavioural competency in question. The next step is to match this semantic query with a pre-existing semantic data model. This semantic model is used to index data pertinent to autonomous vehicles. By aligning the semantic query with the semantic model, this process can extract not just the obvious objects and events, but also implicit details and nuances from the behavioural competency. This embodiment is particularly useful for behavioural competencies that may be complex, multi-layered, or that encompass implicit information.

Optionally, manual parsing may also be implemented. Herein, experts interpret the behavioural competency and subsequently deconstruct it into its constituent objects and events. Such manual analysis ensures precise alignment with the established ODD and OEDR attributes for the autonomous vehicles. It may be appreciated that while this manual technique provides accurate parsing and may be feasible for a limited set of behavioural competencies, it may become increasingly cumbersome and time-intensive as the list of competencies grows in size and complexity.

At step 130, the method 100 includes transforming the set of objects and events into a data structure. It may be contemplated that after identifying these objects and events from the behavioural competency, there is a need to manage and organize this information in a manner that facilitates further processing. Herein, these entities are transformed into a data structure, which, in computer science terms, is a means to organize, manage, and store data. By transforming the identified objects and events into such data structures, it becomes easier to analyse the interactions between these entities, optimize search capabilities, and maintain a logical sequence of operations. For instance, a list or array could maintain a sequential order of events, while more intricate structures like graphs or trees could clarify the relationships and interactions between different objects and events. Once transformed, the data, representing the objects and events, can be methodically accessed, modified, or queried, laying the groundwork for subsequent steps in the testing process of autonomous vehicles.

It may be appreciated that the choice of a specific data structure would often be guided by the nature of interactions and the complexity of relationships amongst the objects and events. In an embodiment of the present invention, the data structure is a graph data structure. The role of the graph data structure in the context of the present invention is to computationally represent behavioural competencies. By doing so, it becomes easier to identify, dissect, and understand the inherent relationships and interactions within these competencies. Such graph data structures are suitable for mapping relationships, especially when there are multiple objects and events interacting in various ways. This is relevant for testing of autonomous vehicles where multiple dynamic entities can have simultaneous interactions.

Herein, transforming the set of objects and events into the graph data structure comprises, first, creating nodes in a graph to represent the objects and using edges in the graph to represent events; and then assigning properties to the nodes and the edges based on attributes of the objects and the events, respectively. In the context of behavioural competencies for autonomous vehicles, objects (like intersections, vehicles, pedestrians) and the events or actions associated with them (like turning, stopping, accelerating) can be naturally represented as nodes and edges respectively. This facilitates a direct, intuitive mapping. Further, by assigning nodes and edges with properties based on the attributes of the objects and events they represent, a deeper layer of information is embedded. For instance, a node, representing a traffic light, may have properties detailing its type, colour status, or geographical location. Conversely, an edge, representing the event of the vehicle approaching the traffic light, may have properties that describe the vehicle's speed, direction, or time to the intersection. The inclusion of such properties in the graph data structure provide enable a more comprehensive simulations and scenario testing for autonomous vehicles.

It may be understood that these properties are not arbitrary but are chosen to accurately represent the characteristics of the objects and events in the context of autonomous vehicles. Such properties may include, but not limited to, speed, direction, location, and interaction type of the objects and the events. For instance, the property "speed" provides information regarding how fast an object is moving or at what velocity an event is unfolding. For autonomous vehicles, understanding the speed of surrounding objects or the rate at which certain events are occurring is crucial. It can help in predicting trajectories, ensuring safe distances, and making real-time decisions. The "direction" property gives insight into the movement orientation of the objects and the progression of events. The "location" property allows for grounding each object and event in a specific point in space. Lastly, the "interaction type" property denotes the nature of interaction between objects or between an object and an event. For instance, it can specify whether two vehicles are overtaking, merging, or colliding. Incorporating these properties into the nodes and edges of the graph data structure ensures that the graph is not just a static depiction of objects and events but a dynamic and detailed model that captures the interactions essential for autonomous vehicle operations.

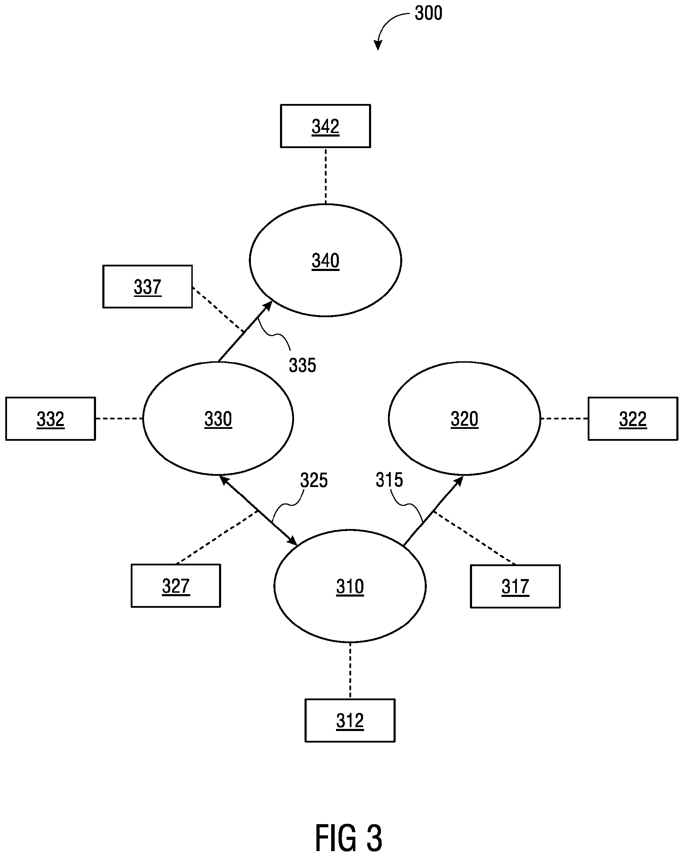

Referring to FIG 3, illustrated is an exemplary data structure (as represented by reference numeral 300) in the form of a graph data structure. In the present example, the data structure 300 represents a behavioural competency related to "Detect intersections and perform turns," depicting the dynamics associated with such behavioural competency. The data structure 300 manifests this behavioural competency into a hierarchical search query. Herein, upon receiving this behavioural competency defined in a natural language, the method 100 identifies "intersection" as the object representative of the ODD and "performing a turn" as the event representative of the OEDR for the autonomous vehicle.

As depicted, the data structure 300 includes a node 310 which may represent a "Vehicle" with associated properties 312 related to the autonomous vehicle, including its type, trajectory, and dimensions. Further, the data structure 300 includes node 320 which may represent a "Road Lane" with associated properties 322 including curvature, radius, width, start and end points. A first edge 315 extending from the "Vehicle" node 310 to the "Road Lane" node 320 is characterized by properties 317 including Entry and exit times, thus defining the vehicle's interaction with the lane. The data structure 300 also includes a node 330 which may represent an "Intersection", with associated properties 332 including approach angles, configuration, radii, and centroid, which corresponds to real-world intersections. A second edge 325 connecting the "Vehicle" node 310 to the "Intersection" node 330 signifies the event of the vehicle executing a turn at the intersection. The second edge 325 is characterized by properties 327 including turn angle, turn speed, and turn radius, providing details of vehicle's turning mechanics. Additionally, the data structure 300 includes a node 340 which may represent a "Traffic Signal" with associated properties 342 including phase timings, which inform the autonomous vehicle's decision-making. A third edge 335 links the "Intersection" node 330 to the "Traffic Signal" node 340, emphasizing the controlled nature of intersections, and is characterized with properties 337 including calibration time signifying the synchronization between the autonomous vehicle's operations and the traffic signal's timings.

This exemplary representation of the data structure 300, as illustrated in FIG 3, serves as a visual blueprint for the transformation of the behavioural competency into structured data elements, enabling the precise and efficient extraction of scenarios for validating the autonomous vehicle's behaviour in real-world contexts.

It may be contemplated by a person skilled in the art that although the present embodiments have been described in terms of the data structure being the graph data structure; in alternative embodiments, the data structure may be of some other form, such as, but not limited to, tree-based data structure, semantic networks, or the like, without departing from the spirit and the scope of the present invention. For example, if hierarchy is the main focus and the interactions are more top-down, trees could serve the purpose. However, trees are a subset of graphs and might be less flexible in representing complex interrelationships. On the other hand, semantic networks are used in artificial intelligence to represent knowledge, and could provide a more complex, nuanced representation of behavioural competencies, especially if there's a need to include attributes, conditions, or other qualifiers.

At step 140, the method 100 includes mapping the data structure to a hierarchy of search queries, the hierarchy of search queries representing relationships and interactions between the objects and the events. It may be appreciated that the nature of the data structure, such as the graph data structure, is interconnected which not only define individual entities, such as objects and events, but also the dynamic relationships and interactions between them. To harness this complexity, a structured approach is essential.Mapping the data structure, particularly the graph data structure, to the hierarchy of search queries helps in simplifying and streamlining the process of scenario extraction. This allows for a systematic, hierarchical organization of potential queries, thus making the search for specific scenarios efficient and effective.

Herein, the hierarchy of search queries is designed in a structured manner where broad queries are systematically deconstructed into more detailed queries. In particular, the hierarchy allows for a tiered approach. For instance, at the top level, broad categories may be found, such as weather conditions, road types, or pedestrian interactions. Deeper into this hierarchy, increasingly specific search queries may be found, such as under the broad category of `pedestrian interactions', find sub-categories like `crosswalk behaviours', `sidewalk activities', and 'unexpected pedestrian actions' may be defined. Each of these can be further divided into even more specific queries. By organizing search queries hierarchically based on the relationships and interactions represented in the data structure, there is a logical flow in the search process. This hierarchical arrangement ensures a logical flow of information retrieval, streamlining the search process (as discussed later).

In an embodiment, mapping the graph data structure to the hierarchy of search queries comprises structuring the search queries in the hierarchy based on the relationships and interactions between the nodes and the edges of the graph data structure. As discussed, the graph data structure is primarily made up of nodes, which represent the objects, and edges, which signify the events or the relationships between these objects. The procedure of mapping the graph data structure to the hierarchy of search queries involves organizing these search queries in a structured manner. The basis for this organization is the intricate relationships and interactions that exist between the nodes and the edges within the graph. In simpler terms, the manner in which the objects (nodes) relate to each other and the events or actions (edges) that occur between them define how the search queries are arranged in the hierarchy. This ensures that when searching for information, the hierarchy provides a clear and logical pathway, making the search process both efficient and intuitive.

In an embodiment, the method 100 further includes indexing the hierarchy of search queries in a database. The indexing of the hierarchy of search queries in the database (such as, the database 210) allows for rapid retrieval, efficient management, and systematic arrangement of the collected information. Considering the complexity and the amount of data involved with autonomous vehicles operation, this step of indexing is important. Specifically, in the present context, the behavioural competencies of autonomous vehicles are vast, including various situations, responses, and actions. When an autonomous vehicle or a related system wants to retrieve specific test scenarios or related data, it needs to do so quickly and efficiently. The act of indexing ensures this speed and efficiency. Furthermore, the indexing of the hierarchy of search queries may aid not only in quick retrieval but also in ensuring that the data remains manageable, organized, and ready for analysis.

At step 150, the method 100 includes providing the hierarchy of search queries to a scenario extraction tool 10, the scenario extraction tool 10 configured to extract scenarios from real-world data based on the provided hierarchy of search queries. The hierarchy of search queries, as discussed, is a systematically organized set of queries derived from the parsing of behavioural competencies of autonomous vehicles. This hierarchy is structured, ranging from broader, more general queries to highly specific ones, capturing the myriad nuances of autonomous vehicle operations. The scenario extraction tool 10, as used herein, is a specialized software module or system designed to utilize extensive real-world data to extract relevant scenarios that match the criteria set by the hierarchy of search queries. Real-world data here may include data from traffic analysis, driving patterns, vehicle interactions, environmental conditions to data from various sensors on multiple autonomous vehicles across diverse driving environments and conditions, and the like. This data provides potential scenarios that an autonomous vehicle might face.

The scenario extraction tool 10 is configured to compare the search queries, from the provided hierarchy of search queries, with the real-world data, to identify matches or situations that align with the criteria set by the hierarchy. For instance, if one of the hierarchical queries relates to "detect and respond to stopped vehicles," the scenario extraction tool 10 will probe the real-world data, searching for instances where such situations have been recorded. It might look for patterns where a vehicle's speed suddenly drops to zero, or where sensor data indicates an obstacle in the direct path.

Herein, the extracted scenarios are utilized by the scenario extraction tool 10 for validating behaviour of the autonomous vehicles for the given operation thereof. That is, once a relevant scenario is identified, the scenario extraction tool 10 isolates it, allowing for further analysis. This extracted scenario may then be used to test the autonomous vehicle's system, to check if it can detect and appropriately respond to such situations, ensuring the vehicle's behavioural competency aligns with the desired standards.

In some implementations, Open Scenario graph data structures are used to define and evaluate specific scenarios. For instance, consider the competency of detecting intersections and executing turns. The behavioural competency is parsed into objects and events. Here, the intersection, with specific configurations such as a 3-way structure having 120, 150, and 90-degree approach angles, is the object. The event relates to left turns with a precise 90-degree angle, made specifically by buses. This setup targets the vehicle's capability to identify and navigate through complex intersections while accommodating for larger vehicle types, like buses.

By aligning the scenario extraction tool 10 with the hierarchy of search queries, the method ensures precision, efficiency, and relevancy in the extraction process. In the absence of such systematic hierarchy, the scenario extraction tool 10 may have to resort to indiscriminate data scanning, which may result in inefficiencies, wasted computational resources, and extraction of scenarios that might not be relevant to the behavioural competency under scrutiny. Thus, the alignment of the scenario extraction tool 10 with the hierarchy of search queries essentially streamlines the extraction process. It ensures that every scenario sourced from the real-world data aligns with the set objectives, ensuring that the behaviour of the autonomous vehicles corresponds with the expectations and standards set out by their behavioural competencies, especially in real-world operational scenarios.

The present method 100 offers a transformative approach in ensuring the safety and efficiency of autonomous vehicles. By systematically receiving behavioural competencies in natural language, parsing them into structured objects and events, and subsequently mapping them to a hierarchy of search queries, the method 100 streamlines the identification of relevant test scenarios. These scenarios, extracted from real-world data, are useful in assessing and validating the behaviour of autonomous vehicles across its various operations. The versatility of the method 100, combined with its precision in scenario extraction, helps both regulators and developers in the rapidly advancing domain of autonomous vehicle technology, ensuring safer vehicular integration into real-world traffic environments.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**Reference Numerals**

| | |
|---|---|
| scenario extraction tool | 10 |
| method | 100 |
| step | 110 |
| step | 120 |
| step | 130 |
| step | 140 |
| step | 150 |
| system | 200 |
| bus | 202 |
| processing unit | 204 |
| memory unit | 206 |
| interface | 208 |
| database | 210 |
| input device | 212 |
| output device | 214 |
| test scenarios identification module | 216 |
| data structure | 300 |
| vehicle node | 310 |
| vehicle node properties | 312 |
| road lane node | 320 |
| road lane node properties | 322 |
| first edge | 315 |
| first edge properties | 317 |
| intersection node | 330 |
| intersection node properties | 332 |
| traffic signal node | 340 |
| traffic signal node properties | 342 |
| third edge | 335 |
| third edge properties | 337 |

## Claims

1. A computer-implemented method (100) for identifying test scenarios for testing behaviour competencies of autonomous vehicles, the method (100) comprising:
receiving a behavioural competency defined in a natural language and related to a given operation of the autonomous vehicles;
parsing the received behavioural competency into a set of objects, representative of Operational Design Domain (ODD) for the autonomous vehicles, and events, representative of Object and Event Detection and Response (OEDR) for the autonomous vehicles;
transforming the set of objects and events into a data structure (300) ;
mapping the data structure (300) to a hierarchy of search queries, the hierarchy of search queries representing relationships and interactions between the objects and the events; and
providing the hierarchy of search queries to a scenario extraction tool (10), the scenario extraction tool (10) configured to extract scenarios from real-world data based on the provided hierarchy of search queries,
wherein the extracted scenarios are utilized by the scenario extraction tool (10) for validating behaviour of the autonomous vehicles for the given operation thereof.

2. The method (100) of claim 1, wherein parsing the received behavioural competency into the set of objects and events comprises extracting a list of nouns and performing a keyword-based search to extract the set of objects and events from the extracted list of nouns.

3. The method (100) of claim 1, wherein parsing the received behavioural competency into the set of objects and events comprises converting the behavioural competency defined in the natural language into a semantic query, and wherein the semantic query is matched with a semantic data model used to index data related to the autonomous vehicles.

4. The method (100) of claim 1, wherein the data structure (300) is a graph data structure.

5. The method (100) of claim 4, wherein transforming the set of objects and events into the graph data structure (300) comprises:
creating nodes in a graph to represent the objects and using edges in the graph to represent events; and
assigning properties to the nodes and the edges based on attributes of the objects and the events, respectively.

6. The method (100) of claim 5, wherein mapping the graph data structure (300) to the hierarchy of search queries comprises structuring the search queries in the hierarchy based on the relationships and interactions between the nodes and the edges of the graph data structure (300).

7. The method (100) of claim 1 further comprising indexing the hierarchy of search queries in a database.

8. The method (100) of claim 1, wherein the hierarchy of search queries comprises weightings for each search query, and the scenario extraction tool (10) is configured to use the weightings to prioritize scenario extraction.

9. A system (200) comprising:
one or more processing units (204); and
a memory unit (206) communicatively coupled to the one or more processing units (204), wherein the memory unit (206) comprises a test scenarios identification module (216) stored in the form of machine-readable instructions executable by the one or more processing units (204), wherein the test scenarios identification module (216) is configured to perform method (100) steps for identifying test scenarios for testing behaviour competencies of autonomous vehicles, according to any of the claims 1 to 8.

10. A computer-program product having machine-readable instructions stored therein, which when executed by one or more processing units (204), cause the one or more processing units (204) to perform a method (100) according to any of the claims 1 to 8.
